# EUROPÄISCHE PATENTSCHRIFT

(11) **EP 1 097 399 B1**
(45) Veröffentlichungstag und Bekanntmachung des Hinweises auf die Patenterteilung: **24.03.2004**
(21) Anmeldenummer: 99936548.9
(22) Anmeldetag: 15.07.1999
(51) Int. Cl.: G02F 1/01

(54) **LICHTMODULATOR MIT PHOTOCHROMER SCHICHT**
LIGHT MODULATOR COMPRISING A PHOTOCHROMIC LAYER
MODULATEUR DE LUMIERE COMPORTANT UNE COUCHE PHOTOSENSIBLE

(30) Priorität: 15.07.1998 DE 19831777
(43) Veröffentlichungstag der Anmeldung: 09.05.2001
(73) Patentinhaber: HAMPP, Norbert, 35287 Amöneburg-Rossdorf (DE)
(72) Erfinder: HAMPP, Norbert, 35287 Amöneburg-Rossdorf (DE)
(74) Vertreter: Tiesmeyer, Johannes, Dipl.-Phys. Dr.
(86) Internationale Anmeldenummer: PCT/EP1999/005062
(87) Internationale Veröffentlichungsnummer: WO 2000/004415

(56) Entgegenhaltungen:
- EP-A- 0 552 085
- US-A- 5 618 654
- WANG SONG Q ET AL: "CHEMICALLY ENHANCED BACTERIORHODOPSIN THIN-FILM SPATIAL LIGHT MODULATOR" OPTICS LETTERS, Bd. 18, Nr. 16, 15. August 1993 (1993-08-15), Seiten 1373-1375, XP000384374 ISSN: 0146-9592
- SANIO M ET AL: "Optically addressed direct-view display based on bacteriorhodopsin" OPTICS LETTERS, 15 MARCH 1999, OPT. SOC. AMERICA, USA, Bd. 24, Nr. 6, Seiten 379-381, XP002119795 ISSN: 0146-9592
- QUARTERLY REVIEWS OF BIOPHYSICS, Bd. 24, Nr. 4, 1991, Seiten 425-478, XP002119796 in der Anmeldung erwähnt

## Beschreibung

Die Erfindung betrifft einen Lichtmodulator mit einer durch Steuerlicht optisch aktivierbaren photochromen Schicht zur Modulation von Signallicht und wenigstens einem optisch transparenten Trägersubstrat für die photochrome Schicht gemäß dem Oberbegriff des Anspruchs 1,

Lichtmodulatoren der vorstehend genannten Art werden auch als optisch adressierbare, räumliche Lichtmodulatoren bezeichnet. Obwohl die photochrome Schicht nur zweidimensional und nicht dreidimensional optisch "adressiert" wird, spricht man üblicherweise von einem räumlichen statt von einem flächigen Lichtmodulator. Nachfolgend werden derartige Lichtmodulatoren als OASLM bezeichnet.

Die photochrome Schicht dient der Übertragung bzw. Vermittlung von Informationen aus dem Steuerlicht, auf das Signallicht. Bei Bestrahlung mit Steuerlicht einer vorbestimmten ersten Lichtwellenlänge reagiert die photochrome Schicht am Ort der Bestrahlung mit einer Änderung bestimmter optischer Eigenschaften - insbesondere mit einer Änderung des optischen Absorptionsvermögens - für Signallicht einer vorbestimmten zweiten Lichtwellenlänge. Mit dem Steuerlicht kann beispielsweise ein Intensitätskontrastbild auf die photochrome Schicht projiziert werden, die dann mit einer dem Kontrastbild entsprechenden Einstellung ihres Absorptionsvermögens für das Signallicht über die vom Steuerlicht bestrahlte Fläche hinweg reagiert. Wird die so durch Steuerlicht optisch aktivierte photochrome Schicht mit Signallicht bestrahlt, so weist das aus der photochromen Schicht austretende Signallicht eine dem Absorptionskontrastmuster entsprechende Modulation auf. Somit kann Information aus dem Steuerlicht flächig und zeitlich variabel auf das Signallicht übertragen werden. Das auf die photochrome Schicht auftreffende Signallicht kann ein ausgedehntes Lichtbündel sein, das die gesamte Lichteintrittsfläche der photochromen Schicht gleichzeitig erfaßt. Entsprechendes gilt für das Steuerlicht. Es besteht jedoch auch die Möglichkeit, die betreffende Information mit einem ablenkbaren Steuerlichtstrahl in die photochrome Schicht "einzuschreiben". Ebenso kann zum "Auslesen" oder zum "Löschen" der Information ein die photochrome Schicht z.B. zeilenweise oder spaltenweise abtastender Signallichtstrahl bzw. "Löschlichtstrahl" verwendet werden.

Eine Vielzahl von photochromen Materialien kommen für derartige Anwendungen in Betracht. Eine Übersicht über die wesentlichen photochromen Materialklassen, deren bekannteste Vertreter und deren Eigenschaften findet sich in H. Dürr, H. Bouas-Laurent, "Photochromism - Molecules and Systems", Studies in Organic Chemistry, Eisevier, Vol. 40, 1990. Neben anderen photochromen Materialien, wie z.B. synthetischen anorganischen und organischen Photochromen, ist Bakteriorhodopsin in Form von Purpurmembranen, im Folgenden als BR bezeichnet, ein besonders interessantes Material für die Ausbildung der photochromen Schicht. Als Purpurmembran bezeichnet man die natürlich vorkommende zweidimensional kristalline Form von Bakteriorhodopsin. Der Aufbau der sogenannten Purpurmembran aus Lipiden und Bakteriorhodopsin ist in zahlreichen Literaturbeispielen beschrieben. Exemplarisch sei D. Oesterhelt et al., Quart. Rev. Biophys., 24 (1991) 425-478, als Literaturstelle angeführt.

Unter anderem sind es folgende fünf Gründe, die Bakteriorhodopsin besonders geeignet machen für die geschilderte Anwendung.
(i) BR zeichnet sich durch sehr effiziente photochemische Reaktion mit mehreren photoaktiven Zuständen aus, die es ermöglichen, "Schreiben" und "Löschen" photochemisch zu realisieren.
(ii) BR besitzt eine besonders hohe Reversibilität, was es für einen dynamischen Einsatz prädestiniert.
(iii) Die spezifischen Absorptionen der langlebigen Zustände von BR und auch der Brechungsindexunterschied zwischen diesen Zuständen sind sehr hoch, so daß eine gute Modulation des Signallichtes erzielt wird.
(iv) Bakteriorhodopsin weist einen stark anisotropen Chromophor auf und eignet sich deshalb zur Polarisations-selektiven Modulation.
(v) Außer dem Wildtyp von BR stehen heute eine ganze Reihe von gentechnologisch erzeugten Varianten von BR mit veränderten Aminosäuresequenzen und/oder Varianten zur Verfügung, die chemisch vom Retinyliden-Rest verschiedene Moleküle als Chromophore enthalten und andere spektrale und/oder andere photokinetische Eigenschaften haben als der Wildtyp, z.B. verschiedene Absorptionseigenschaften und/oder wesentlich langlebigere Photointermediate.

Die in (v) spezifizierte Materialgruppe wird im folgenden als BR-Varianten bezeichnet. Der Begriff Bakteriorhodopsin bzw. BR wird derart verwendet, daß entweder der Wildtyp von Bakteriorhodopsin oder eine der BR-Varianten darunter verstanden wird. Weiter wird der Begriff Bakteriorhodopsin bzw. BR sowohl für monomeres BR als auch für BR in Form von Purpurmembranen verwendet. Die Gewinnung von BR-Varianten kann mit verschiedenen Methoden erfolgen. Ein Überblick über bekannte Verfahren zur Herstellung von mutierten Bakteriorhodopsinen und BR-Analogen, die durch die Anwesenheit von vom im Wildtyp vorkommenden Retinyliden Rest verschiedenen chromophoren Gruppen gekennzeichnet sind, wird in N. Vsevolodov, "Biomolecular electronics - an introduction via photosensitive proteins" (1998), Birkhäuser, Boston, Kapitel 3, gegeben. Typische technisch interessante BR-Varianten, die durch Modifikation der Aminosäurezusammensetzung von Wildtyp-BR gewonnen werden, sind solche mit verlängerter Lebensdauer des sogenannten M-Zustandes, z.B. solche bei denen die Asparaginsäure an Position 96 ausgetauscht oder entfernt oder durch Entfernen anderer Aminosäuren in ihrer Position verschoben wurde, oder solche mit hoher Wahrscheinlichkeit zur Bildung von 9-cis Retinal, z.B. solche bei denen die Asparaginsäure an Position 85 ausgetauscht oder entfernt oder durch Entfernen anderer Aminosäuren in ihrer Position verschoben wurde. Typische technisch interessante BR-Varianten die durch Ersatz des im Wildtyp-BR vorkommenden Retinyliden-Restes durch analoge Moleküle entstehen, sind z.B. 4-Keto-retinal und Dihydro-Retinal (Sheves et al., Biochem., 24, 1985, 1260-1265). Es sei ausdrücklich darauf hingewiesen, daß auch eine Kombination von Modifikation der Aminosäurezusammensetzung und Ersatz der chromophoren Gruppe unter dem Begriff BR-Varianten verstanden wird.

Die genannten Möglichkeiten und Eigenschaften von BR sind dem Fachmann bekannt und haben Anwendungen von BR in verschiedenen optischen Informationsverarbeitungstechniken mit beeinflußt.

In OASLMs bildet die BR-Schicht die optisch aktive Komponente. Die optische Modulation beruht darauf, daß Bakteriorhodopsin aus dem Anfangszustand B (maximale Absorption bei ca. 570 nm) durch Lichteinstrahlung mit der Wellenlänge λ_{B} in mindestens einen anderen spektral verschiedenen Zustand überführt werden kann. Der langlebigste Zustand des Photozyklusses von Wildtyp BR wird üblicherweise als M-Zustand bezeichnet (maximale Absorption bei ca. 410 nm). Mit Licht der Wellenlänge λ_{M} kann dieser photochemisch in den Anfangszustand B überführt werden. Über die BR-Schicht als Vermittler kann somit Licht im Wellenlängenbereich λ_{B} durch gleichzeitige Beleuchtung der BR-Schicht mit Licht im Wellenlängenbereich λ_{M} verändert bzw. gesteuert werden oder auch umgekehrt.

Der Modulationsgrad hängt dabei ab von der Größe der photochromenoptischen Absorptionsänderungen, die durch die Lichteinstrahlung in der BR-Schicht hervorgerufen wird, von der Quantenausbeute der Phototransformationen B ⇔ M und den Intensitäten und Wellenlängen der beiden Lichteinstrahlungen. Wegen der polarisationsempfindlichen Photoreaktion des BR spielt die relative Lage der Polarisationszustände der beiden Wellenlängen bzw. Wellenlängenbereiche für die Höhe der Modulation ebenfalls eine Rolle. Weiter findet proportional zur Absorptionsmodulation eine Modulation des lokalen Brechungsindex statt, die ebenfalls für Modulationszwecke genutzt werden kann.

OASLMs sind als aktive optische Komponenten in Strahlengängen zur optischen Bild- und Informationsverarbeitung seit langem bekannt und werden dazu benutzt, um die Amplitude, die Phase und gegebenenfalls auch die Polarisation eines räumlich ausgedehnten Lichtwellenfeldes in Abhängigkeit von der Intensität einer Steuerlichtquelle zu steuern bzw. zu modulieren.

Eine Übersicht zu dem Kenntnisstand über BR und die Anwendungsmöglichkeiten von BR in der optischen Informationationsverarbeitung kann u.a. den Artikeln von D. Oesterhelt et al., Quart. Rev. Biophys., 24 (1991) 425-478, D. Zeisel und N. Hampp, J. Phys. Chem., 96 (1992) 7788-7792, N. Hampp et al., Proc. SPIE - Int. Soc. Opt. Eng., 1732 (1993) 260-270 und N. Vsevolodov, "Biomolecular electronics - an introduction via photosensitive proteins" (1998), Birkhäuser, Boston, entnommen werden.

In R.R: Birge et al., Ann. Int. Conf. IEEE Eng. Med. Biol. Soc. 12 Nr.4 , (1990), 1788-1789 wird die Verwendung eines räumlichen Lichtmodulators in einem Strahlengang zum holografischen Einlesen und Auslesen von optischen Daten beschrieben, die in einer BR-Schicht gespeichert sind.

In dem Artikel von R. Thoma et al., Opt. Lett. 16 (1991) 651-653 wird. ebenfalls ein räumlicher Lichtmodulator auf der Basis einer BR-Schicht beschrieben, der als Raumfrequenzfilter zur optischen Bildkorrektur, insbesondere zur optischen Kantenverstärkung eingesetzt wurde.

Ein spezieller räumlicher Lichtmodulator auf der Basis eines Perot-Fabry Resonators, der als aktives Element eine BR-Schicht enthält, wird in US 5 618 654 beschrieben.

Der bekannte Lichtmodulator weist zwei einander parallel gegenüberliegende, planparallele, teildurchlässige Spiegel auf. Bei gegebenem Spiegelabstand L und Brechungsindex n des Mediums zwischen den Spiegeln ist das Fabry-Perot-Interferometer entsprechend der Resonanzbedingung L = N λᵢᵣ/2 n für Licht der Wellenlänge λᵢᵣ nahezu vollständig durchlässig, wenngleich die Spiegel einzeln betrachtet ein hohes Reflexionsvermögen für das Licht mit der Resonanzwellenlänge λᵢᵣ aufweisen müssen. Beim Gegenstand der US 5 618 654 wird der Brechungsindex der photochromen Schicht zwischen den Resonatorspiegeln durch Bestrahlen mit Steuerlicht der Wellenlänge λᵥ variiert, um für Signallicht mit der Wellenlänge λᵢᵣ die Resonanzbedingung wahlweise zu erfüllen. Auf diese Weise wird das Transmissionsvermögen des Interferometer-Lichtmodulators insgesamt für das Signallicht λᵢᵣ variiert und somit das Signallicht moduliert. Damit das zur Änderung des Brechungsindex erforderliche Steuerlicht zu der photochromen Schicht gelangen kann, ist es bei dem bekannten Modulator funktionsbedingt erforderlich, daß die Resonatorspiegel für das Steuerlicht mit einem möglichst hohen Transmissionsgrad durchlässig sind, also ein möglichst geringes Reflexionsvermögen aufweisen, wohingegen das Reflexionsvermögen der jeweiligen Resonatorspiegel für das Signallicht dem Funktionsprinzip des Fabry-Perot-Interferometers entsprechend möglichst groß sein muß.

Weitere Beispiele von Lichtmodulatoren, die nach dem Prinzip des Fabry-. Perot-Interferometers funktionieren, sind in DE-OS 19 35 881 und US 4 834 511 beschrieben. Bei all diesen Lichtmodulatoren nach dem Prinzip des Fabry-Perot-Interferometers kommt es funktionsbedingt darauf an, daß die zur Erfüllung der Resonanzbedingung eingestellten geometrischen Verhältnisse, insbesondere der Abstand zwischen den Resonatorspiegeln präzise beibehalten werden. Auch bereitet das Einhalten einer Parallelstellung der Spiegel zueinander und die Vermeidung von Schwankungen des Abstands zwischen den Spiegeln über die gesamte Modulatorfläche hinweg Probleme. Die vorstehend genannten und bei den bekannten Lichtmodulatoren zwingend einzuhaltenden geometrischen Bedingungen verlangen üblicherweise einen erschütterungsfreien und thermostatisierten Aufbau bei den Lichtmodulatoren nach dem Interferometer-Prinzip.

Weitere Hinweise auf Lichtmodulatoren unter Verwendung einer BR-Schicht ergeben sich aus den Arbeiten von R.B. Gross et. al., Proc. SPIE-Int. Soc. Opt. Eng. 1662 (1992) 186-196 und Q. W. Song et. al., Opt. Lett. 18 (1994) 1373-1375, sowie H. Takei u. N. Shimizu, Opt. Lett. 19 (1994), 248-250.

Der Erfindung liegt die Aufgabe zugrunde, ein integriertes optisches Bauelement auf der Basis eines optisch adressierbaren, räumlichen Lichtmodulators mit verbesserten Anwendungseigenschaften zu entwickeln, das vielseitig als aktives Schalt- bzw. Steuerelement in Strahlengängen zur optischen Abbildung, in optischen Anzeigesystemen, in optischen Systemen zur Informationsspeicherung und -verarbeitung und auch holografischen Meß- und Verarbeitungssystemen eingesetzt werden kann.

Ausgehend von einem Lichtmodulator der eingangs genannten Art wird diese Aufgabe erfindungsgemäß durch die Merkmale des kennzeichnenden Teils des Anspruchs 1 gelöst.

Das Steuerlicht kann von einer Steuerlicht-Eintrittsseite des Lichtmodulators her die photochrome Schicht erreichen und in die photochrome Schicht eindringen. Die reflektierende Filterschicht befindet sich auf der der Steuerlicht-Eintrittsseite abgewandten Seite der photochromen Schicht und sorgt dafür, daß das Steuerlicht wieder zur photochromen Schicht zurückreflektiert wird. Hierdurch wird erreicht, daß das Steuerlicht wesentlich besser für die photochemische Umsetzung (Photokonvertierung) des photochromen Materials ausgenutzt wird, da das Steuerlicht zweimal durch die photochrome Schicht geht und somit der Steuerlichtweg in der photochromen Schicht verdoppelt wird. Auf diese Weise wird der intensitätsabhängige Modulationsgrad der photochromen Schicht erheblich verbessert. Dies führt zu wirtschaftlichen Vorteilen, da leistungsschwächere und damit preiswertere Steuerlichtquellen eingesetzt werden können. Dies gilt insbesondere für Laser als Steuerlichtquellen. Alternativ reduziert sich der Bedarf an BR-Menge pro Fläche des OASLM, um einen vorgegebenen Modulationsgrad bei gegebener Steuerlichtquelle zu erreichen. Da insbesondere genetisch veränderte Bakteriorhodopsine teuer sind, ergeben sich daraus wirtschaftliche Vorteile.

Die reflektierende Filterschicht hat jedoch nicht nur die Funktion der effizienteren Ausnutzung des Steuerlichtes zur optischen Aktivierung der photochromen Schicht, sondern auch die Funktion, das Steuerlicht von dem modulierten Signallicht weitgehend zu separieren, indem sie das an der photochromen Schicht modulierte Signallicht zu einer Lichtaustrittsseite des Lichtmodulators hin durchläßt und das Steuerlicht nach Maßgabe des Reflexionsvermögens in entgegengesetzter Richtung reflektiert. Das modulierte Signallicht kann daher ohne nennenswerte Störung durch das Steuerlicht ausgewertet werden. Dieser Gesichtspunkt ist von besonderer Bedeutung, falls als Steuerlichtstrahl ein vergleichsweise intensiver. Laserstrahl zum "Beschreiben" der photochromen Schicht herangezogen wird und visuelle Betrachtung der photochromen Schicht von der Signallicht-Austrittsseite des Lichtmodulators her erfolgen soll oder wenn im Signallicht-Strahlengang hinter dem Lichtmodulator ein lichtempfindliches Medium liegt, z.B. eine photoempfindliche Schicht.

Gegenüber den bereits oben angesprochenen bekannten Lichtmodulatoren, die nach dem Prinzip des Fabry-Perot-Interferometers funktionieren und Spiegel mit einem möglichst kleinen Reflexionsvermögen für das Steuerlicht haben, weist der Lichtmodulator nach der Erfindung wesentliche Vorteile auf. Hierzu zählt ein einfacher Aufbau, der im Hinblick auf die Dimensionen von Schichten und Abständen zwischen den Filterschichten vergleichsweise unkritisch ist. Thermostatisierungsmaßnahmen sind bei dem Lichtmodulator nach der Erfindung nicht erforderlich, da Längenausdehnungseffekte keine nennenserten Auswirkungen auf die Funktion des Modulators haben, so daß die Funktion des Lichtmodulators nach der Erfindung durch übliche Temperaturschwankungen nicht beeinträchtigt wird. Da die Schichtdicke der photochromen Schicht bei dem Lichtmodulator nach der Erfindung weithin frei gewählt werden kann, sind auch die herstellungstechnischen Anforderungen an die Einhaltung von Toleranzen usw. gering. Die größeren Freiheiten hinsichtlich etwaiger Dickenschwankungen der Schichten des Lichtmodulators nach der Erfindung erleichtern die Realisierung relativ großer Lichtmodulatorflächen.

Auch kann bei dem Gegenstand der vorliegenden Erfindung mit polychromatischem Signallicht gearbeitet werden.

Vorzugsweise ist die das Steuerlicht reflektierende Filterschicht zwischen der photochromen Schicht und dem Trägersubstrat angeordnet, wobei sie in direktem Kontakt mit der photochromen Schicht steht. Durch die direkte Kopplung von photochromer Schicht und reflektierender Filterschicht wird vermieden, daß es zu einem erheblichen Strahlversatz kommt, der die nutzbare Auflösung des OASLM reduzieren würde. Durch die direkte Kopplung von photochromer Schicht und reflektierender Schicht werden also optische Bauteile eingespart, was zu wirtschaftlichen Vorteilen führt und die Baugröße des Systems minimiert.

Durch die Entfernung des störenden Steuerlichtes unmittelbar hinter der photochromen Schicht kann ferner der Streulichtanteil im nachfolgenden Signallicht-Strahlengang deutlich reduziert und somit das Signal/Rauschverhältnis verbessert werden. Eine zusätzliche Verbesserung des Signal/Rauschverhältnisses resultiert daher, daß die Anzahl der inneren Grenzflächen und damit die Reflexionsverluste vermindert werden.

Vorzugsweise weist die reflektierende Filterschicht bei der Wellenlänge maximaler Reflektivität ein Reflexionsvermögen von mindestens 99% auf, so daß eine nahezu vollständige Trennung des Steuerlichts vom modulierten Signallicht stattfinden kann.

Vorzugsweise enthält die photochrome Schicht als aktive Komponente Bakteriorhodopsin.

Besonders bevorzugt enthält die photochrome Schicht eine Variante der Wildform des Bakteriorhodopsins, die eine höhere Lichtempfindlichkeit und/oder eine längere Lebensdauer des längstlebigen Intermediates aufweist als die Wildform, und zwar insbesondere eine Variante, bei der die Aminosäureposition 85 modifiziert ist, oder eine Variante, bei der die Aminosäureposition 96 modifiziert ist, oder eine Variante, bei der als chromophore Gruppe Dihydro-retinal oder 4-Keto-retinal dient, oder eine Variante, bei der sowohl Dihydro-retinal oder 4-Keto-retinal als chromophore Gruppe dient, als auch die Aminosäurepositionen 85 und/oder 96 modifiziert sind.

Der OASLM nach der Erfindung kann insbesondere eine breitbandig fürsichtbares Licht wirksame Entspiegelungsschicht an wenigstens einer Seite aufweisen.

Desweiteren kann es zweckmäßig sein, wenn zumindest an der dem Trägersubstrat abgewandten Seite der photochromen Schicht eine für sichtbares Licht durchlässige Schutzschicht aufgebracht wird.

Gemäß einer Weiterbildung der Erfindung kann eine zweite wellenlängenselektiv reflektierende Schicht mit einem zu der ersten reflektierenden Filterschicht unterschiedlichen wellenlängenabhängigen Reflexionsvermögen vorgesehen sein. Im wesentlichen das gleiche Ergebnis läßt sich auch mit einer Beschichtung erzielen, wenn diese zwei oder evtl. sogar mehrere Wellenlängenbereiche aufweist, bei denen eine ausgeprägte selektive Reflexion stattfindet.

Gemäß einer besonders bevorzugten Weiterbildung der Erfindung weist der Lichtmodulator an der der reflektierenden Filterschicht abgewandten Seite der photochromen Schicht eine das Signallicht wellenlängenselektiv reflektierende Filterschicht auf, die Signallicht, das die photochrome Schicht durchdrungen hat, zurückreflektiert. Ein solcher Lichtmodulator mit einem jeweiligen Reflexionsfilter an einander entgegengesetzten Seiten der photochromen Schicht stellt ein optisches Bauelement dar, das für interessante Anwendungen geeignet ist, so z.B. für die nachstehend noch beschriebene Inkohärent/Kohärent-Wandlung oder die ebenfalls noch erläuterte Frequenzumsetzung.

Für verschiedene Anwendungen kann ein Lichtmodulator der eingangs genannten Art interessant sein, der nur eine das Signallicht wellenlängenselektiv reflektierende Filterschicht aufweist, um Signallicht, das die photochrome Schicht durchdrungen hat, zurückzureflektieren. Ein solcher Lichtmodulator gibt somit das modulierte Signallicht zu der Seite aus, an der das unmodulierte Signallicht in den Lichtmodulator eingetreten ist.

Die Erfindung betrifft ferner eine optische Anzeigevorrichtung mit einem Lichtmodulator nach einem der Ansprüche 1 - 6 als Anzeigeelement. Die optische Anzeigevorrichtung umfaßt eine Steuerlichtquelle zur Aktivierung der photochromen Schicht des Lichtmodulators mit Steuerlicht nach Maßgabe der jeweils anzuzeigenden Information und eine Signallichtquelle zur Bereitstellung des zur Sichtbarmachung der anzuzeigenden Information vom Lichtmodulator zu modulierenden Signallichtes, wobei der Lichtmodulator in dem Steuerlicht-Strahlengang und in dem Signallicht-Strahlengang derart angeordnet ist, daß das Steuerlicht und das Signallicht an der der reflektierenden Filterschicht abgewandten Seite der photochromen Schicht in die photochrome Schicht eintreten, wobei das modulierte Signallicht an der der Lichteintrittsseite entgegengesetzten Seite des Lichtmodulators austreten kann. Die visuelle Betrachtung der angezeigten Information bzw. des modulierten Signallichtes erfolgt von der der Lichteintrittsseite abgewandten Seite des Lichtmodulators. Bei der anzuzeigenden Information kann es sich um ein Kontrastbild einer im Steuerlicht-Strahlengang angeordneten Objektmaske handeln, das auf die photochrome Schicht des Lichtmodulators projiziert wird.

Gemäß einer bevorzugten Variante der optischen Anzeigevorrichtung ist die Steuerlichtquelle ein Laser, wobei eine Ablenkeinrichtung, insbesondere ein zweiachsiger Spiegelscanner, zur gesteuerten Ablenkung des Steuerlichtstrahls im Sinne einer flächigen Adressierung und ein die Intensität des Steuerlichtstrahles in Abhängigkeit von seinem Auftreffort auf der photochromen Schicht nach Maßgabe der anzuzeigenden Information steuernder Intensitätsmodulator vorgesehen sind.

Vorzugsweise ist der Laser zwischen zwei Wellenlängen λ_{S} und λ_{L} umschaltbar, die so gewählt sind, daß die photochrome Schicht mit Licht der Wellenlänge λ_{S} beschreibbar und mit Licht der Wellenlänge λ_{L} löschbar ist. Beschreiben der photochromen Schicht bedeutet in diesem Zusammenhang, daß die photochrome Schicht zur Änderung ihrer optischen Eigenschaften für das Signallicht aktiviert wird. Löschen der photochromen Schicht bedeutet in diesem Zusammenhang, daß die photochrome Schicht wieder in den Ursprungszustand zurückgeführt wird.

Die Erfindung betrifft ferner eine optische Anordnung mit einer Steuerlichtquelle, einer Signallichtquelle und einem Lichtmodulator nach Anspruch 7 zur Übertragung von in einem Steuerlichtstrahl enthaltenen Informationen auf einen Signallichtstrahl, wobei der die jeweilige Information tragende Steuerlichtstrahl von der der das Steuerlicht wellenlängenselektiv reflektierenden Filterschicht abgewandten Seite der photochromen Schicht des Lichtmodulators her in die photochrome Schicht eintritt und der Signallichtstrahl von der der das Signallicht wellenlängenselektiv reflektierenden Filterschicht abgewandten Seite der photochromen Schicht her in die photochrome Schicht eintritt.

Eine derartige optische Anordnung kann als Inkohärent/Kohärent-Wandler herangezogen werden, wenn das Steuerlicht inkohärent und das Signallicht kohärent ist. Die in dem inkohärenten Steuerlichtstrahl enthaltenen Informationen können in einer solchen Anordnung auf den kohärenten Signallichtstrahl übertragen werden. Bei der zu übertragenden Information kann es sich beispielsweise um das Bild einer im Steuerlicht-Strahlengang befindlichen Objektmaske handeln, das auf die photochrome Schicht des Lichtmodulators projiziert wird.

Eine weitere Verwendungsmöglichkeit der vorstehend genannten optischen Anordnung betrifft die Übertragung der in einem Steuerlichtstrahl mit der Wellenlänge λ₁ enthaltenen Objektinformation auf einen Signallichtstrahl mit der Wellenlänge λ₂. Hierbei dient als Steuerlichtquelle ein Laser mit der Wellenlänge λ₁ und als Signallichtquelle ein Laser mit der Wellenlänge λ₂.

Bevorzugte Anwendungen der Erfindung sind:
(i) hochauflösende optische Anzeigesysteme, die man von der Lichtaustrittsseite des OASLM für das modulierte Signallicht her mit dem bloßen Auge betrachten kann, ohne Gefahr zu laufen, von dem intensiven Laserlicht, das als Steuerlicht benutzt wird, geblendet zu werden bzw. Schaden zu nehmen,
(ii) Projektionsdisplays zur hochauflösenden Datenprojektion,
(iii) Inkohärent/Kohärent-Wandler für verschiedene optische Systeme,
(iv) variable Masken für die Belichtung von lichtempfindlichen Schichten in der Photolithographie.

Ausführungsbeispiele der Erfindung werden im folgenden mit Bezugnahme auf die Figuren erläutert. Es zeigen:
- Fig. 1: eine Gestaltungsmöglichkeit eines Strahlengangs für den Einsatz eines optisch adressierbaren räumlichen Lichtmodulators mit Signal-bzw. Primärlicht und Steuer- bzw. Sekundärlicht,
- Fig. 2: einen Strahlengang, bei dem der Lichtmodulator als visuelles Anzeigelement fungiert,
- Fig. 3: die grundlegenden Komponenten des bei der Anordnung in Fig. 2 verwendeten Lichtmodulators,
- Fig. 4: einen Strahlengang, bei dem der Lichtmodulator als Inkohärent/Kohärent-Wandler fungiert,
- Fig. 5: den Aufbau einer für die in Fig. 4 gezeigten Anwendung vorteilhaften-Ausführungsform des Lichtmodulators,
- Fig. 6: den Strahlengang eines Frequenzumsetzers, bei dem der Lichtmodulator als Kohärent/Kohärent-Umsetzer dient, mit dem eine Wellenlänge mit einer anderen gesteuert werden kann.

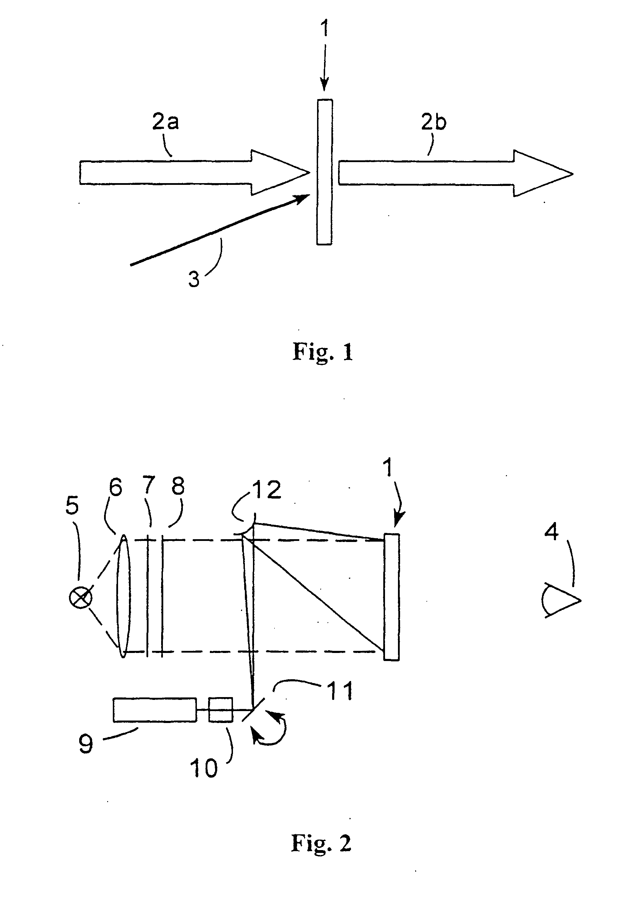

In Fig. 1 ist ein optisch adressierbarer Lichtmodulator 1 dargestellt, im folgenden als OASLM bezeichnet, auf den unmoduliertes Signallicht 2a auftrifft. Die optischen Eigenschaften der photochromen Schicht des OASLM 1, z.B. die Absorption bzw. Reflektivität oder der Brechungsindex, werden durch das Steuerlicht 3 örtlich moduliert. Diese örtliche Modulation der optischen Eigenschaften führt zu einer entsprechenden Modulation des Signallichts 2a bei dessen Durchgang durch die photochrome Schicht, was dazu führt, daß das aus dem OASLM 1 austretende Signallicht 2b entsprechend moduliert ist. Das Steuerlicht 3a trifft im Beispielsfall gemäß Fig. 1. von der gleichen Seite wie das unmodulierte Signallicht 2a auf den OASLM 1. Es ist auch möglich, daß mehrere Steuerlichtquellen gleichzeitig benutzt werden (Mehrfachmodulation). Weiter kann noch eine weitere Lichtquelle zum photochemischen Löschen des OASLM hinzugefügt sein.

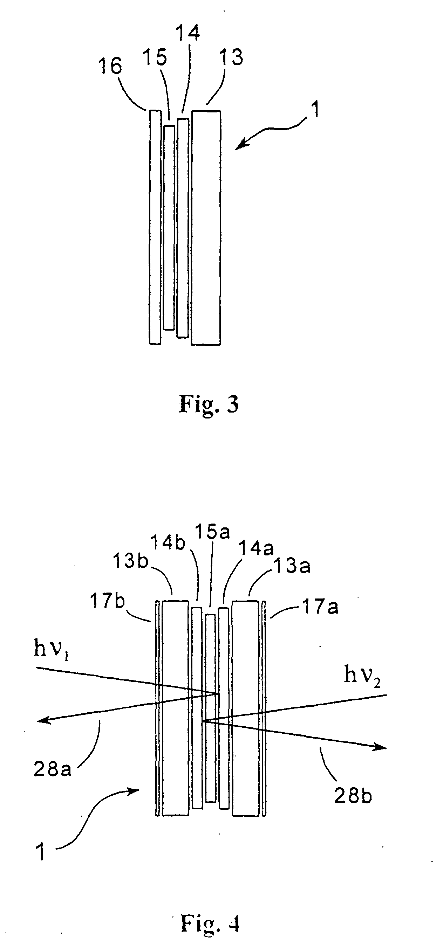

In Fig. 2 ist ein Anwendungsbeispiel für einen in Fig. 3 gezeigten und nachstehend noch näher erläuterten OASLM 1 nach der Erfindung illustriert. Es handelt sich bei Fig. 2 um eine schematische Darstellung eines hochauflösenden Anzeigesystems, in dem der OASLM 1 ein mit dem bloßen Auge 4 zu betrachtendes Anzeigeelement bildet. Der Bakteriorhodopsin enthaltende OASLM 1 wird mit unmoduliertem Signallicht beleuchtet, das von der Halogenlampe 5 als Lichtquelle ausgeht und durch den Kondensor 6, das Farbfilter 7 und einen Diffusor 8 hindurchtritt. Das Steuerlicht wird von einem Laser 9 über ein optisches System, bestehend aus einem schnellen Intensitätsmodulator 10, einem zweiachsigen Spiegelscanner 11 und einem geeigneten Umlenkspiegel 12 auf den OASLM 1 gerichtet, und zwar von der gleichen Seite her wie das Signallicht. Zur Realisierung großer-Ablenkwinkel für den Steuerlichtstrahl kann als weiteres Bauteil eine sogenannte f-theta-Linse (nicht gezeigt) in der Anordnung nach Fig. 2 vorgesehen sein. Der Intensitätsmodulator dient dazu, die Steuerlichtintensität in Abhängigkeit vom jeweiligen Ort des Steuerlichtstrahles auf dem OASLM 1 nach Maßgabe der gewünschten Anzeige zu steuern, wobei eine (nicht gezeigte) Steuereinrichtung den Spiegelscanner 11 zur Bewegung des Steuerlichtstrahls und den Intensitätsmodulator 10 zur jeweiligen Einstellung der Steuerlichtintensität steuert. Vorzugsweise wird der Spiegelscanner 11 so gesteuert, daß der Steuerlichtstrahl mit einer bestimmten Wiederholungsrate den OASLM zeilenweise oder spaltenweise über die gesamte Seitenfläche des OASLM abtastet, um die anzuzeigende Information in die photochrome Schicht "einzuschreiben" (Rastersteuerung). Alternativ kann der Spiegelscanner 11 so gesteuert werden, daß der Steuerlichtstrahl jeweils nur die Spur der anzuzeigenden Information auf die photochrome Schicht zeichnet (Vektorsteuerung). Das Spektrum des in den OASLM 1 eingestrahlten Signallichtes umfaßt einen Wellenlängenbereich, der mit dem Spektralbereich korrespondiert, in dem das Absorptionsverhalten des OASLM 1 durch das Steuerlicht beeinflußbar ist. Entsprechend den photochemischen Eigenschaften des BR-Materials führt das Steuerlicht also zu einer Änderung bzw. Einstellung des Absorptionsverhaltens der photochromen Schicht nach Maßgabe des Intensitätsmusters des Steuerlichtes und somit zu einer entsprechenden Modulation des Signallichtes, das auf einen Beobachter 4 trifft. Bei 4 kann in Fig. 2 z.B. auch ein Photodetektor, ein lichtempfindlicher Film, z.B. aufgebracht auf ein Werkstück, oder dergleichen zur Auswertung des modulierten Signallichtes vorgesehen sein. Eine das Steuerticht nach Durchgang durch die photochrome Schicht wellenlängenselektiv zurückreflektierende Filterschicht sorgt dafür, daß das Steuerlicht nicht - oder allenfalls stark geschwächt zur Seite des Beobachters 4 hin durchgelassen wird. Zur Entfernung eines etwaig vom OASLM 1 durchgelassenen Restanteils an Steuerlicht kann ein Linearpolarisationsfilter (in gekreuzter Stellung zur Polarisationsrichtung des im Beispielsfall linear polarisierten Steuerlichtes) dem OASLM 1 nachgeschaltet sein.

Eine bevorzugte Anwendung der Erfindung ist daher ein Display, das direkt mit dem menschlichen Auge betrachtet werden kann, das durch einen Computer-gesteuerten Laserscanner in hoher Auflösung mit Wiederholungsraten von einigen Sekunden mit dem Steuerlicht "beschrieben" werden kann und bei dem keinerlei Gefahr besteht, daß der menschliche Betrachter durch transmittiertes Laserlicht ( = Steuerlicht), hier ein vergleichsweise starker Laser, geblendet wird oder gar der Gefahr einer Schädigung des Sehapparates ausgesetzt ist. Der Laser 9 kann vorzugsweise zwischen zwei Wellenlängen hin- und hergeschaltet werden. Die erste dient zum "Beschreiben" des OASLM 1, die zweite erlaubt ein gezieltes "Löschen" des OASLM 1. Der OASLM ist vorzugsweise mit einer Kombination von hochreflektierenden dielektrischen Schichten versehen, so daß sowohl Licht der Schreibwellenlänge als auch Licht der Löschwellenlänge nur unwesentlich, d.h. weniger als 5 %, transmittiert wird. Ein derartiges Display erlaubt die Darstellung von Bildinformationen und Zeicheninformationen mit einer Auflösung, wie sie heute von klassischen Computerbildschirmen nicht annähernd erreicht wird. Typischerweise entspricht die nutzbare Auflösung der erfindungsgemäßen Displays derjenigen von Laserdruckern. Anwendungsfelder für derartige hochauflösende Displays sind die Architektur, die Medizin, das Ingenieurwesen und eine Vielzahl anderer technischer Anwendungsbereiche, bei denen Daten mit sehr hoher Auflösung dargestellt und betrachtet werden sollen, ohne für diese Zwecke einen Ausdruck auf Papier anzufertigen.

In Fig. 3 sind die grundlegenden Komponenten des bei der Anordnung nach Fig. 2 verwendeten OASLM 1 im Detail dargestellt. Auf ein transparentes Trägersubstrat 13 mit einer wellenlängenselektiv hochreflektierenden Beschichtung 14 (Reflexionsfilter 14) für die Wellenlänge des Steuerlichts, ggf. die Wellenlänge des Schreib- und des Löschlichtes, ist eine BR-Schicht 1 5 aufgebracht. Derartige wellenlängenselektiv hochreflektiv beschichtete. Substratesind mittels bekannter Bedampfungsverfahren herstellbar. Für eine Reihe von Wellenlängenbereichen sind solche Spiegel, z.B. unter der Bezeichnung hochreflektive Laserspiegel, kommerziell erhältlich. Die BR-Schicht 15 ist hier mit einer transparenten Deckschicht 16 versehen, die zur Erzielung der notwendigen optischen Ebenheit, zur Erzielung einer hohen Kratzfestigkeit, zur Verkapselung der BR-Schicht gegenüber der Umwelt, d.h. schwankenden relativen Luftfeuchtigkeiten etc., dient und ggf. auch für zusätzliche Filterfunktionen ausgerüstet sein kann. Die Reflektivität der als Reflexionsfilter wirkenden Beschichtung 14 beträgt mindestens 80%, bevorzugt mindestens 90%, besonders bevorzugt mindestens 99% für eine bzw. zwei ausgewählte Wellenlängen. Die spektrale Bandbreite des Reflexionsfilters beträgt maximal 70 nm und bevorzugt weniger als 50 nm für jede der ausgewählten Wellenlängen. Die reflektiven Schichten werden in an sich bekannter Weise durch Bedampfen des Trägersubstrates mit Schichten geeigneter Dicke und unterschiedlichen Brechungsindizes hergestellt. Wenn sowohl für Schreibals auch für Löschlicht eine reflektierende Schicht vorgesehen ist, so können diese kombiniert werden. Das Trägersubstrat 13 besteht aus einem im Wellenlängenbereich des sichtbaren Lichtes (400 - 800 nm) nicht oder nur gering absorbierenden Material, z.B. Glas, Quarz oder transparentem Kunststoff. Durch das Reflexionsfilter 14 wird das Steuerlicht (Modulationslicht) zurückreflektiert, passiert ein zweites Mal die BR-Schicht 15 und trägt damit zur Verbesserung der Modulation bei. Dies gilt sowohl für den Schreib- wie auch für den Löschvorgang. Gegenüber der Verwendung eines absorptiven Filters besteht weiter der Vorteil, daß keine lokale Wärmeentwicklung stattfindet, die z.B. bei einem kohärenten Strahlengang zu Brechungsindexvariationen der umgebenden Luft führen würde. Gleichzeitig wird das Steuerlicht aus dem modulierten Signalstrahlengang hinter dem OASLM 1 ferngehalten.

Die in direktem Kontakt mit dem Reflexionsfilter 14 stehende BR-Schicht 1 5. kann aus einem BR-Wildtyp oder aus einer BR-Variante oder einer Mischung von einer oder mehreren BR-Varianten und ggf. einem BR-Wildtyp bestehen. Die BR-Schicht kann ferner Polymere und andere Hilfsstoffe, z.B. Haftvermittler zur Schichtbildung und Fixierung und weitere Hilfs- bzw. Zusatzstoffe zur Stabilisierung der Protonenverfügbarkeit, des Wassergehalts, des pH-Werts und zur Brechungsindexanpassung enthalten. Die Präparation der hier verwendeten BR-Schicht wird beispielsweise durch Verteilen einer wäßrigen Mischung aus 3 % Gelatine oder Polyvinylalkohol und 8 % Bakteriorhodopsin auf dem vorbereiteten Substrat erreicht. Nach Verdunsten des Wassers bleibt ein Film aus Bakteriorhodopsin und dem Matrixmaterial zurück, der eine Dicke von weniger als 1 mm, typischerweise etwa 50 µm bis 250 µm, aufweist. Durch eine Vielzahl von literaturbekannten Hilfsstoffen können die Photoeigenschaften des immobilisierten BR modifiziert werden.

In Fig. 4 ist ein weiteres bevorzugtes Ausführungsbeispiel eines OASLM 1 nach der Erfindung dargestellt. Der OASLM 1 nach Fig. 4 weist auf den einander abgewandten Seiten der photochromen Schicht 15a jeweils eine wellenlängenselektiv reflektierende Filterschicht 14a bzw. 14b auf. Die wellenlängenselektiv reflektierenden Filterschichten 14a und 14b haben unterschiedliche Reflexionscharakteristiken, wobei die Filterschicht 14a zur wellenlängenselektiven Reflexion von Steuerlicht 28a und die Filterschicht 14b zur wellenlängenselektiven Reflexion von Signallicht 28b vorgesehen ist. Die reflektierende Filterschicht 14a ist auf dem optisch transparenten Trägersubstrat 13a aufgebracht. In entsprechender Weise befindet sich die reflektierende Filterschicht 14b auf dem transparenten Substrat 13b. Der OASLM 1 kann optional Breitbandentspiegelungen oder wellenlängenselektive Entspiegelungen 17a und 17b an den Außenseiten aufweisen, um Reflexionsverluste zu vermindern. Die photochrome Schicht 15a enthält vorzugsweise Bakteriorhodopsin als photochromes Material, das sowohl mit den Wellenlängen des Steuerlichts 28a als auch denen des Signallichtes 28b. wechselwirken kann.

Technisch besonders interessant ist die gleichzeitige Anwendung von Licht einer ersten Wellenlänge, die bevorzugt vom B-Zustand absorbiert wird (z.B. 568 nm) und Licht einer zweiten Wellenlänge, die bevorzugt vom M-Zustand absorbiert wird (z.B. 413 nm). Beide Wellenlängen können z.B. mit Krypton-Gaslasern erzeugt werden.

Die in den Fig. 3 und 4 dargestellten "Luftspalte" zwischen den Elementen sind lediglich aus Gründen der übersichtlichen Darstellung eingezeichnet worden. Sie sind in der realisierten Ausführungsform normalerweise nicht vorhanden.

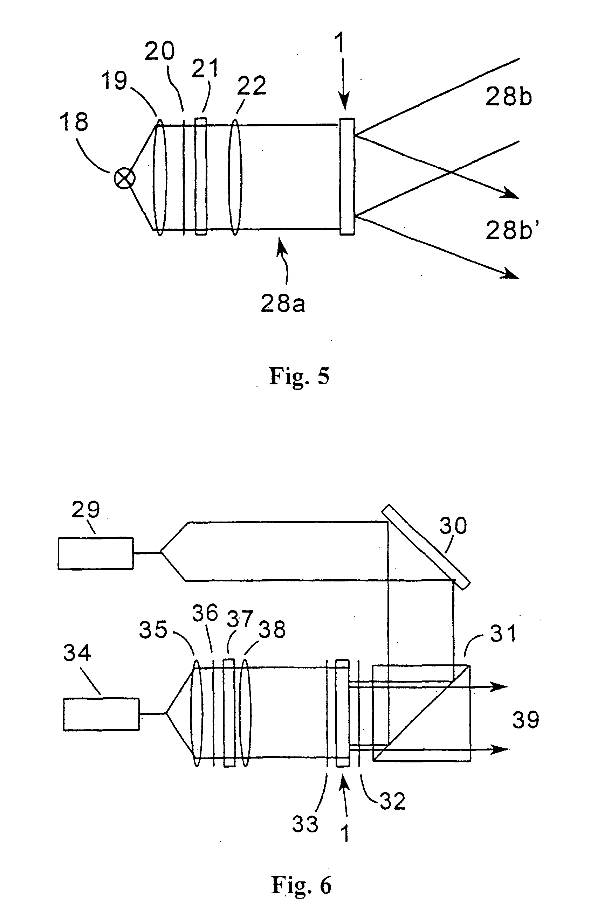

In Fig. 5 ist eine Anwendungsmöglichkeit für einen OASLM nach der Erfindung illustriert, wie er in Fig. 4 dargestellt ist.

Fig. 5 zeigt in schematischer Darstellung einen optischen Aufbau, der als Inkohärent/Kohärent-Wandler eingesetzt werden kann. Auf der in Fig. 5 linken Seite des OASLM 1 befindet sich die optische Einrichtung 18 - 22 zur Erzeugung eines inkohärenten Steuerlichtbündels 28a, welches die durch Vermittlung des OASLM 1 zu übertragende Information trägt. Im Beispielsfall umfaßt diese Einrichtung 18 - 22 zur Erzeugung des Steuerlichtbündels 28a eine Halogenlampe 18 als Lichtquelle, einen Kondensor 19, ein die gewünschte Steuerlichtwellenlänge durchlassendes Farbfilter 20, eine Objektstruktur 21 und eine Abbildungsoptik 22. Durch das Steuerlichtbündel 28a wird somit das Informationsbild der Objektstruktur 21 auf den OASLM 1 projiziert, um die photochrome Schicht 15a diesem Informationsbild entsprechend zu aktivieren. Die in Fig. 5 nicht eingezeichnete, aber in Fig. 4 erkennbare Filterschicht 14a des OASLM 1 reflektiert den von der photochromen Schicht 15a durchgelassenen Anteil des Steuerlichtes 28a zurück, so daß dieser Steuerlichtanteil beim zweiten Durchgang durch die photochrome Schicht 15a zur optischen Aktivierung der photochromen Schicht 1 5a beitragen kann. Außerdem sorgt die reflektierende Filterschicht 14a dafür, daß der OASLM 1 das Steuerlicht nicht oder allenfalls stark geschwächt in den in Fig. 4 auf der rechten Seite des OASLM 1 liegenden Raumbereich des Signallichtes durchläßt. Die Objektstruktur 21 kann z.B. aus einer statischen Maske oder aus einer dynamischen Maske, beispielsweise in Form eines Flüssigkristallbildschirms, bestehen, der von dem Steuerlichtbündel 28a durchstrahlt wird, um die Objektinformation auf das inkohärente Steuerlichtbündel 28a aufzumodulieren. Von der in Fig. 5 rechten Seite des OASLM 1 her wird der OASLM 1 mit nichtmoduliertem kohärentem Licht 28b (Signallicht) bestrahlt, welches von der reflektierenden Filterschicht 14a (Fig. 4) zu der photochromen Schicht 15a hin durchgelassen und nach Passieren der photochromen Schicht 15a an der das Signallicht 28b wellenlängenselektiv reflektierenden Filterschicht 14b zurückreflektiert wird. Das reflektierte kohärente Signallicht 28b' ist mit der Objektinformation des inkohärenten Steuerlichtes 28a moduliert oder beladen.

Die Funktion des OASLM 1 nach Fig. 4 ist nicht auf die Inkohärent-Kohärent-Wandlung im Sinne der Anordnung nach Fig. 5 beschränkt; es kann ebenso auf beiden Seiten des OASLM 1 kohärentes bzw. inkohärentes Licht verwendet werden. In jedem Fall wird mit Hilfe der photochromen BR-Schicht die Information von dem Steuerlichtstrahlengang auf den Signallichtstrahlengang übertragen.

Bei dem OASLM 1 nach Fig. 4 kann das bisher als Steuerlicht bezeichnete Licht 28a die Funktion des Signallichtes übernehmen, wenn das bisher als. Signallicht bezeichnete Licht 28b die Funktion des Steuerlichtes übernimmt. Da es also möglich ist, den OASLM 1 nach Fig. 4 wechselweise von der linken Seite und von der rechten Seite her mit Steuerlicht anzusteuern, um die im Steuerlicht enthaltende Information über den OASLM 1 auf das Signallicht auf der jeweils anderen Seite zu übertragen, kann der OASLM 1 als bidirektionales optisches Datenübertragungselement bzw. Informations-. übertragungselement eingesetzt werden.

Die Anordnung nach Fig. 5 kann im Prinzip auch mit einem OASLM 1 mit der Struktur gemäß Fig. 3 betrieben werden, wobei das inkohärente Licht von der Seite des Substrates 13 her auf die BR-Schicht 15 trifft, wohingegen das zu modulierende kohärente Licht von der entgegengesetzten Seite her eingestrahlt wird. Die Spiegelschicht 14 wäre in diesem Falle eine das kohärente (Signallicht) reflektierende Filterschicht. Bei einem solchen Inkohärent/Kohärent-Wandler mit einem Lichtmodulator nach Fig. 3 würde jedoch im Strahlengang des kohärenten Lichtes evtl. auch störendes inkohärentes Licht auftreten. Um einer solchen Situation vorzubeugen, könnte man mit polarisiertem inkohärentem Licht arbeiten und das von dem Lichtmodulator durchgelassene inkohärente Licht z.B. mittels Polarisationsfilter ausblenden.

In Fig. 6 ist eine weitere Anwendungsmöglichkeit für den OASLM 1 nach Fig. 4 illustriert. Der OASLM 1 wird von einem ersten Laser 34 mit einem mittels Linsen 35 aufgeweiteten Strahl beleuchtet, der durch Graufilter 36 in der Intensität und durch eine als Objekt dienende statische oder variable Maske 37 moduliert wird. Mit Hilfe der Abbildungsoptik 38 wird die Objektinformation der Maske 37 auf den OASLM 1 abgebildet. Es ist zusätzlich eine λ/4-Platte 33 vorgesehen, die aus dem linear polarisierten Licht des Lasers 34 zirkular polarisiertes Licht macht. Durch das von dem Laser 34 ausgehende Steuerlicht wird die mittels der Maske 37 aufgeprägte Information in den OASLM 1 übertragen. Der die photochrome Schicht 15a durchdringende Steuerlichtanteil wird an der wellenlängenselektiv reflektierenden Filterschicht 14a (Fig. 5) zurückreflektiert.

Von einem zweiten Laser 29 geht ein zweiter aufgeweiteter Strahl (Signallichtstrahl) aus, der über einen Spiegel 30 und einen polarisierenden Strahlteiler 31 in unmodulierter Form auf den OASLM 1 gelenkt wird, und zwar auf der der Steuerlicht-Eintrittsseite entgegengesetzten Seite des OASLM 1. Bevor der modulierte Signallichtstrahl auf den OASLM 1 trifft, passiert er die λ/4-Platte 32. Nach Rückreflexion an der das Signallicht wellenlängenselektiv reflektierenden Filterschicht 14b (Fig. 5) hat der Signallichtstrahl die Polarisationsrichtung, die senkrecht zur ursprünglichen Einstrahlungspolarisationsrichtung liegt und wird durch den polarisierenden Strahlteiler hindurchtreten. Der austretende Signallichtstrahl 39 hat die Wellenlänge des zweiten Lasers 29, trägt aber die mit dem Steuerlicht in den OASLM übertragene Information der Objektmaske 37. Die optische Anordnung nach Fig. 6 erlaubt es, die Information von einem ersten Lichtstrahl mit der Wellenlänge λ1 auf einen zweiten Lichtstrahl mit der Wellenlänge λ2 aufzumodulieren. Man spricht deshalb von einem Frequenzumsetzer.

Ein besonderer Vorzug des OASLM ergibt sich durch die Verwendung von Bakteriorhodopsin (BR). Aufgrund der effizienten Photochemie des BR ist es möglich, ein sehr rasch arbeitendes dynamisches System zu realisieren, bei dem sich die zu übertragende Information zeitlich im Millisekundenbereich ändern kann. Bei einer Anwendung von 568 nm und 413 nm für das Steuerlicht bzw. Signallicht (oder umgekehrt) wird eine maximale Amplitudenmodulation erzielt bei gleichzeitiger hoher zeitlicher Dynamik des OASLM, da Schreiben und Löschen an jedem Ort photochemisch realisiert werden kann.

## Patentansprüche

1. Lichtmodulatorelement zur Modulation von Signallicht mittels Laserstrahlung als Steuerlicht, welches einer Steuerlicht-Eintrittsseite des Lichtmodulatorelementes zuzuführen ist,
umfassend eine durch das Steuerlicht zur Modulation von Signallicht optisch aktivierbare photochrome Schicht (15; 15a) und ein optisch transparentes Trägersubstrat (13; 13a) für die photochrome Schicht (15; 15a),
**dadurch gekennzeichnet, dass** das Lichtmodulatorelement (1) an der der Steuerlicht-Eintrittsseite abgewandten Seite der photochromen Schicht (15; 15a) als weitere Schicht eine für Signallicht durchlässige, das Steuerlicht jedoch wellenlängenselektiv mit einer spektralen Bandbreite von maximal 70 nm reflektierende Reflexionsfilterschicht (14; 14a) aufweist, um Steuerlicht, welches die photochrome Schicht (15; 15a) durchdrungen hat, in die photochrome Schicht (15; 15a) zurückzureflektieren, wobei die Reflexionsfilterschicht (14; 14a) ein Reflexionsvermögen von mindestens 80 % für das Steuerlicht aufweist.

2. Lichtmodulator nach Anspruch 1, wobei die Reflexionsfilterschicht (14; 14a) zwischen der photochromen Schicht (15; 15a) und dem Trägersubstrat (13; 13a) angeordnet ist und mit der photochromen Schicht (15; 15a) in direktem Kontakt steht.

3. Lichtmodulator nach Anspruch 1 oder 2, wobei die Reflexionsfilterschicht (14; 14a) ein Reflexionsvermögen von mindestens 99% für das Steuerlicht aufweist.

4. Lichtmodulator nach Anspruch 3, wobei die Reflexionsfilterschicht (14; 14a) in zusätzlich einem weiteren Wellenlängenbereich ein Reflexionsvermögen von mindestens 80%, insbesondere von mindestens 99%, aufweist.

5. Lichtmodulator nach einem der vorhergehenden Ansprüche, wobei die photochrome Schicht (15; 15a) Bakteriorhodopsin enthält.

6. Lichtmodulator nach Anspruch 5, wobei die photochrome Schicht (15; 15a) eine Variante der Wildform des Bakteriorhodopsins enthält, die eine höhere Lichtempfindlichkeit und/oder eine längere Lebensdauer des längstlebigen Intermediates aufweist als die Wildform, insbesondere eine Variante, bei der die Aminosäureposition 85 modifiziert ist, oder eine Variante, bei der die Aminosäureposition 96 modifiziert ist, oder eine Variante, bei der als chromophore Gruppe Dihydro-retinal oder 4-Keto-retinal dient, oder eine Variante, bei der sowohl Dihydro-retinal oder 4-Keto-retinal als chromophore Gruppe dient,- als auch die Aminosäureposition 85 und/oder 96 modifiziert sind.

7. Lichtmodulatorelement nach einem der vorhergehenden Ansprüche, **dadurch gekennzeichnet, daß** an der der Reflexionsfilterschicht (14a) abgewandten Seite der photochromen Schicht (15a) eine das Signallicht wellenlängenselektiv reflektierende Reflexionsfilterschicht (14b) vorgesehen ist, um Signallicht, das die photochrome Schicht (15a) durchdrungen hat, zurückzureflektieren.

8. Optische Anzeigevorrichtung mit einem Lichtmodulatorelement (1) nach einem der Ansprüche 1 - 6 als Anzeigeelement, einem Laser als Steuerlichtquelle (5) zur Aktivierung der photochromen Schicht (15) des Lichtmodulatorelementes (1) mit Steuerlicht nach Maßgabe der jeweils anzuzeigenden Information und einer Signallichtquelle (9) zur Bereitstellung des zur Sichtbarmachung der anzuzeigenden Information vom Lichtmodulatorelement (1) zu modulierenden Signallichtes, wobei das Lichtmodulatorelement (1) in dem Steuerlicht-Strahlengang und in dem Signallicht-Strahlengang derart angeordnet ist, daß das Steuerlicht und das Signallicht an der der Reflexionsfilterschicht (14) abgewandten Seite der photochromen Schicht (15) in die photochrome Schicht (15) eintreten, wobei das modulierte Signallicht an der der Lichteintrittsseite entgegengesetzten Seite des Lichtmodulatorelementes (1) austreten kann.

9. Optische Anzeigevorrichtung nach Anspruch 8, wobei eine Ablenkeinrichtung (11), insbesondere ein zweiachsiger Scanner, zur gesteuerten Ablenkung des Steuerlichtstrahls und ein die Intensität des Steuerlichtstrahles in Abhängigkeit von seinem Auftreffort auf der photochromen Schicht (15) nach Maßgabe der anzuzeigenden Information steuernder Intensitätsmodulator (10) vorgesehen sind.

10. Optische Anzeigevorrichtung nach Anspruch 9, wobei der Laser (9) zwischen zwei Wellenlängen λ_{S} und λ_{L} umschaltbar ist, die so gewählt sind, daß die photochrome Schicht (15) mit Licht der Wellenlänge λ_{S} beschreibbar und mit Licht der Wellenlänge λ_{L} löschbar ist.

11. Optische Anordnung mit einer Steuerlichtquelle (18; 34), einer Signallichtquelle (29) und einem Lichtmodulatorelement nach Anspruch 7 zur Übertragung von in einem Steuerlichtstrahl enthaltenen Informationen auf einen Signallichtstrahl, wobei der die jeweilige Information tragende Steuerlichtstrahl von der der das Steuerlicht wellenlängenselektiv reflektierenden Reflexionsfilterschicht (14a) abgewandten Seite der photochromen Schicht (15a) her in die photochrome Schicht (15a) eintritt und der Signallichtstrahl von der der das Signallicht wellenlängenselektiv reflektierenden Reflexionsfilterschicht (14b) abgewandten Seite der photochromen Schicht (15a) her in die photochrome Schicht (15a) eintritt.

12. Optische Anordnung nach Anspruch 11, wobei das Steuerlicht (28a) inkohärent und das Signallicht (28b) kohärent ist.

13. Optische Anordnung nach Anspruch 11, wobei die Steuerlichtquelle (34) ein Laser mit einer Wellenlänge λ₁ und die Signallichtquelle (29) ein Laser mit der Wellenlänge λ₂ ist.

## Claims

1. Light modulator element for modulating signal light by means of laser radiation as control light which is to be fed to a control light entry side of the light modulator element, comprising a photochromic layer (15; 15a) which can be optically activated by the control light for the purpose of modulating signal light, and an optically transparent substrate (13; 13a) for the photochromic layer (15; 15a), **characterized in that** the light modulator element (1) has as further layer on the side of the photochromic layer (15; 15a) averted from the control light entry side a reflective filter layer (14; 14a) which is transparent to signal light but reflects the control light in a wavelength-selective fashion with a spectral bandwidth of at most 70 nm, in order to retroreflect into the photochromic layer (15; 15a) control light which has penetrated the photochromic layer (15; 15a), the reflective filter layer (14; 14a) having a reflectivity as regards the control light of at least 80%.

2. Light modulator according to Claim 1, in which the reflective filter layer (14; 14a) is arranged between the photochromic layer (15; 15a) and the substrate (13; 13a) and makes direct contact with the photochromic layer (15; 15a).

3. Light modulator according to Claim 1 or 2, in which the reflective filter layer (14; 14a) has a reflectivity of at least 99% as regards the control light.

4. Light modulator according to Claim 3, in which the reflective filter layer (14; 14a) has a reflectivity of at least 80%, in particular of at least 99%, in at least one further wavelength region in addition.

5. Light modulator according to one of the preceding claims, in which the photochromic layer (15; 15a) contains bacteriorhodopsin.

6. Light modulator according to Claim 5, in which the photochromic layer (15; 15a) contains a variant of the wild form of the bacteriorhodopsin, which has a higher light sensitivity and/or a longer service life of the longest lived intermediates than the wild form, in particular a variant in the case of which the amino acid position 85 is modified, or a variant in the case of which the amino acid position 96 is modified, or a variant in the case of which dihydroretinal or 4-ketoretinal serves as chromophore group, or a variant in the case of which both dihydroretinal or 4-ketoretinal serve as chromophore group and the amino acid position 85 and/or 96 are modified.

7. Light modulator according to one of the preceding claims, **characterized in that** a reflective filter layer (14b) which reflects the signal light in a wavelength-selective fashion is provided on the side of the photochromic layer (15a) averted from the reflective filter layer (14a), in order to retroreflect signal light which has penetrated the photochromic layer (15a).

8. Optical display device having a light modulator (1) according to one of Claims 1-6 as display element, a laser as control light source (5) for activating the photochromic layer (15) of the light modulator element (1) with the aid of control light in accordance with the information respectively to be displayed, and a signal light source (9) for providing the signal light which is to be modulated by the light modulator element (1) in order to visualize the information to be displayed, the light modulator element (1) being arranged in the control light beam path and in the signal light beam path in such a way that the control light and the signal light enter the photochromic layer (15) on the side of the photochromic layer (15) averted from the reflective filter layer (14), the modulated signal light being capable of emerging on the side of the light modulator element (1) opposite the light entry side.

9. Optical display device according to Claim 8, a deflecting device (11), in particular a biaxial scanner, being provided for the controlled deflection of the control light beam, and an intensity modulator (10) being provided which controls the intensity of the control light beam as a function of its impingement position on the photochromic layer (15) in accordance with the information to be displayed.

10. Optical display device according to Claim 9, in which the laser (9) can be switched over between two wavelengths λ_{S} and λ_{L} which are selected such that the photochromic layer (15) can be written with light of wavelength λ_{S} and can be erased with light of wavelength λ_{L}.

11. Optical arrangement having a control light source (18; 34), a signal light source (29) and a light modulator element according to Claim 7 for the purpose of transmitting information contained in a control light beam onto a signal light beam, in which the control light beam carrying the respective information enters the photochromic layer (15a) from the side of the photochromic layer (15a) averted from the reflective filter layer (14a) reflecting the control light in a wavelength-selective fashion, and the signal light beam enters the photochromic layer (15a) from the side of the photochromic layer (15a) averted from the reflective filter layer (14b) reflecting the signal light in a wavelength-selective fashion.

12. Optical arrangement according to Claim 11, in which the control light (28a) is incoherent and the signal light (28b) is coherent.

13. Optical arrangement according to Claim 11, in which the control light source (34) is a laser with a wavelength λ₁, and the signal light source (29) is a laser with the wavelength λ₂.

## Revendications

1. Elément modulateur de lumière pour la modulation de lumière de signalisation au moyen de rayonnement laser comme lumière de commande, laquelle doit être acheminée à un côté entrée de la lumière de commande de l'élément modulateur de lumière,
comprenant une couche photochrome (15 ; 15a) pouvant être activée optiquement par la lumière de commande pour la modulation de la lumière de signalisation et un substrat support (13) optiquement transparent pour la couche photochrome (15 ; 15a),
**caractérisé en ce que** l'élément modulateur de lumière (1) comporte comme autre couche, du côté de la couche photochrome (15 ; 15a) opposé au côté d'entrée de la lumière de commande, une couche filtrante à réflexion (14, 14a) transparente pour la lumière de signalisation, mais réfléchissant la lumière de commande de façon sélective en fonction de la longueur d'onde avec une largeur de bande spectrale de 70 nm au maximum, pour réfléchir de nouveau dans la couche photochrome (15 ; 15a) la lumière de commande qui a pénétré dans la couche photochrome (15 ; 15a), sachant que la couche filtrante à réflexion (14 ; 14a) possède pour la lumière de commande un pouvoir réfléchissant d'au moins 80 %.

2. Modulateur de lumière selon la revendication 1, dans lequel la couche filtrante à réflexion (14 ; 14a) est disposée entre la couche photochrome (15 ; 15a) et le substrat support (13 ; 13a) et est en contact direct avec la couche photochrome (15 ; 15a).

3. Modulateur de lumière selon la revendication 1 ou 2, dans lequel la couche filtrante à réflexion (14 ; 14a) présente un pouvoir réfléchissant d'au moins 99 % pour la lumière de commande.

4. Modulateur de lumière selon la revendication 3, dans lequel la couche filtrante à réflexion (14 ; 14a) présente en plus dans un autre intervalle de longueur d'onde un pouvoir réfléchissant d'au moins 80 %, en particulier d'au moins 99 %.

5. Modulateur de lumière selon l'une quelconque des revendications précédentes, dans lequel la couche photochrome (15 ; 15a) contient de la rhodopsine bactérienne.

6. Modulateur de lumière selon la revendication 5, dans lequel la couche photochrome (15 ; 15a) contient une variante de la forme sauvage de la rhodopsine bactérienne qui présente une sensibilité supérieure à la lumière et / ou une durée de vie plus longue de l'intermédiaire de durée de vie la plus longue que la forme sauvage, en l'occurrence en particulier une variante pour laquelle la position d'acide aminé 85 est modifiée, ou une variante pour laquelle la position d'acide aminé 96 est modifiée, ou une variante pour laquelle du dihydro-rétinal ou du 4-céto-rétinal sert de groupe chromophore, ou une variante pour laquelle en même temps du dihydro-rétinal ou du 4-céto-rétinal sert de groupe chromophore et les positions d'acide aminé 85 et / ou 96 sont modifiées.

7. Modulateur de lumière selon l'une quelconque des revendications précédentes, **caractérisé en ce que** sur le côté de la couche photochrome (15a) détourné de la couche filtrante à réflexion (14a) est prévue une couche filtrante à réflexion (14b) qui réfléchit la lumière de signalisation de manière sélective en fonction de la longueur d'onde, pour réfléchir la lumière de signalisation qui a pénétré dans la couche photochrome (15a).

8. Dispositif d'affichage optique avec un élément modulateur de lumière (1) selon l'une quelconque des revendications 1 à 6 comme organe d'affichage, un laser comme source de lumière de commande (5) pour l'activation de la couche photochrome (15) de l'élément modulateur de lumière (1) avec de la lumière de commande compte tenu de l'information à afficher respectivement, et une source de lumière de signalisation (9) pour fournir la lumière de signalisation à moduler par l'élément modulateur de lumière (1) pour la visualisation de l'information à afficher, l'élément modulateur de lumière (1) étant disposé dans la trajectoire des rayons de la lumière de commande et dans la trajectoire des rayons de la lumière de signalisation, de telle sorte que la lumière de commande et la lumière de signalisation pénètrent dans la couche photochrome (15) du côté de la couche photochrome (15) détourné de la couche filtrante à réflexion (14), la lumière de signalisation modulée pouvant sortir du côté de l'élément modulateur de lumière (1) opposé au côté d'entrée de la lumière.

9. Dispositif d'affichage optique selon la revendication 8, dans lequel sont prévus un dispositif de renvoi (11), en particulier un scanner biaxial, pour la déviation commandée du rayon de lumière de commande, et un modulateur d'intensité (10) qui commande l'intensité du rayon de lumière de commande compte tenu de l'information à afficher en fonction de son lieu d'incidence sur la couche photochrome (15).

10. Dispositif d'affichage optique selon la revendication 9, dans lequel le laser (9) est commutable entre deux longueurs d'onde λ_{S} et λ_{L}, qui sont choisies de telle sorte que la couche photochrome (15) peut être inscrite avec de la lumière de la longueur d'onde λ_{S} et peut être effacée avec de la lumière de la longueur d'onde λ_{L}.

11. Disposition optique avec une source de lumière de commande (18 ; 34), une source de lumière de signalisation (29) et un élément modulateur de lumière selon la revendication 7 pour la transmission d'informations contenues dans un rayon de lumière de commande sur un rayon de lumière de signalisation, dans laquelle le rayon de lumière de commande portant l'information respective pénètre dans la couche photochrome (15a) depuis le côté de la couche photochrome (15a) détourné de la couche filtrante à réflexion (14a) qui réfléchit sélectivement la lumière de commande en fonction de la longueur d'onde, et que le rayon de lumière de signalisation pénètre dans la couche photochrome (15a) depuis le côté de la couche photochrome (15a) détourné de la couche filtrante à réflexion (14b) qui réfléchit sélectivement la lumière de signalisation en fonction de la longueur d'onde.

12. Disposition optique selon la revendication 11, dans laquelle la lumière de commande (28a) est incohérente et la lumière de signalisation(28b) est cohérente.

13. Disposition optique selon la revendication 11, dans laquelle la source de lumière de commande (34) est un laser de la longueur d'onde λ₁ et la source de lumière de signalisation (29) laser de la longueur d'onde λ₂.
